# EUROPÄISCHE PATENTSCHRIFT

(11) **EP 0 795 274 B1**
(45) Veröffentlichungstag und Bekanntmachung des Hinweises auf die Patenterteilung: **11.04.2001**
(21) Anmeldenummer: 97101442.8
(22) Anmeldetag: 30.01.1997
(51) Int. Cl.: A23G 1/18, A23G 3/20, A23G 3/22, A23G 3/24

(54) **Verfahren und Vorrichtung zum kontinuierlichen Temperieren von zu verarbeitenden kakaobutter-haltigen oder ähnlichen fett-haltigen Massen**
Method and apparatus for continuously tempering masses containing cocoa butter or similar fat containing masses to be processed
Procédé et appareil de conditionnement continu de masses contenant du beurre de cacao ou des graisses analogues en vue de leur mise en oeuvre.

(30) Priorität: 13.02.1996 DE 19605165
(43) Veröffentlichungstag der Anmeldung: 17.09.1997
(73) Patentinhaber: Sollich KG, 32105 Bad Salzuflen (DE)
(72) Erfinder: Sollich, Helmut, 24407 Rabenkirchen (DE)
(74) Vertreter: Patentanwälte Rehberg + Hüppe

(56) Entgegenhaltungen:
- DE-B- 1 219 321

## Beschreibung

Die Erfindung betrifft ein Verfahren und eine Vorrichtung zum kontinuierlichen Temperieren von zu verarbeitenden kakaobutterhaltigen oder ähnlichen fetthaltigen Massen, mit einer von der Masse in Masserichtung durchflossenen Temperierzone und einem Kältemittelkreislauf, wobei Kältemittel durch einen den Verdampfer bildenden Kühlmantel der Temperierzone im Gegenstrom geführt und so die Masse unter Direktverdampfung temperiert wird, und mit einer den Kondensator und das Expansionsventil des Kältemittelkreislaufs überbrückenden Heißgasleitung, in der die Menge des heißen Kältemittels in Abhängigkeit von der Temperatur der Masse am Ende der Temperierzone geregelt wird. Derartige Vorrichtungen werden insbesondere zum kontinuierlichen Temperieren relativ kleiner Massemengen eingesetzt. Es wird ein Kältemittelkreislauf angewendet. Unter einer Direktverdampfung wird die direkte Abfuhr der Wärme der zu temperierenden Masse verstanden, also ohne Zwischenschaltung eines weiteren Wärmeübertragungsmediums und ohne einen entsprechenden weiteren Kreislauf. Das Verfahren und die eingangs beschriebene Vorrichtung können für sich innerhalb einer Maschineneinheit angewendet werden, wobei die zu temperierende Masse an anderer Stelle erwärmt bzw. aufgeschmolzen wird. Es ist aber auch möglich, die beschriebene Kühlung und Vorkristallisierung der Masse als zweiten Teil einer maschinellen Vorrichtung vorzusehen, in deren erster Teil die Masse erwärmt bzw. aufgeschmolzen wird.

Ein Verfahren und eine Vorrichtung der eingangs beschriebenen Art sind aus der DE-PS 12 19 321 bekannt. Dabei findet nicht nur ein Kältemittelkreislauf mit Kompressor, Kondensator, Expansionsventil und Verdampfer Verwendung, sondern es ist bereits eine Heißgasleitung vorgesehen, die den Kondensator und das Expansionsventil überbrückt. Diese Heißgasleitung stellt gleichsam eine Kurzschlußleitung dar, über die heißes, gasförmiges Kältemittel vor dem Kondensator abgezweigt und der in den Verdampfer einmündenden Leitung nach dem Expansionsventil hinzugefügt wird. In der Heißgasleitung ist ein Ventil angeordnet, welches in Abhängigkeit von der Temperatur der Masse am Ende der Temperierzone gesteuert wird. Durch das abwechselnde Öffnen und Schließen des Ventils wird die Vorrichtung geregelt. ziel dieser Regelung ist es, trotz Schwankungen der Menge und der Temperatur der zu temperierenden Masse am Eingang in die Temperierzone eine gute Vorkristallisation und eine etwa konstante Temperatur der Masse am Ende der Temperierzone zu erzielen. Im Verdampfer wechselt bei den entsprechenden Schaltungen des Ventils in der Heißgasleitung eine Flüssigkeitsströmung mit einer Flüssigkeit/Gas-Gemischströmung ab, wobei der Kompressor des Kältemittelkreislaufes kontinuierlich betätigt wird. Infolge dieses Wechsels der Strömungsverhältnisse im Verdampfer ändert sich die Verdampferleistung sprunghaft und in erheblichem Umfange, wobei relativ große Temperaturschwankungen an den Wärmeübertragungsflächen zu der zu temperierenden Masse auftreten.

Aus der DE-PS 12 49 660 ist eine Anordnung zum Temperieren von Schokolademassen bekannt, bei der ebenfalls ein Kältemittelkreislauf und eine Heißgasleitung Verwendung finden, die zwischen dem Kompressor und dem Kondensator abzweigt und gleichfalls den Kondensator und das Expansionsventil umgeht. Der Temperierzylinder besitzt auf seinem Umfang einen Kühlmantel, der den Verdampfer des Kältemittelkreislaufes bildet und durch den das über das Expansionsventil geführte Kältemittel im Gegenstrom vom Ende des Temperierzylinders bis zu dessen Anfang geführt wird. Parallel zu diesem Kühlmantel ist der Temperierzylinder von einem Heizmantel umgeben, der ebenfalls am Ende der Temperierzone beginnt und bis zu dessen Anfang reicht. An diesen Heizmantel ist die Heißgasleitung angeschlossen, in der wiederum ein Magnetventil und ein Voreinstellventil angeordnet sind. Auch hier ist ein Massefühler zum Erfassen der Temperatur der temperierten Masse am Ende des Temperierzylinders vorgesehen, mit dessen Hilfe das Magnetventil in der Heißgasleitung gesteuert wird. Durch die getrennte Führung des flüssigen Kältemittels im Kühlmantel und des gasförmigen Kältemantels im Wärmemantel wird zwar vorteilhaft eine Gemischströmung vermieden. Dennoch wirkt sich das Öffnen und Schließen des Ventils in der Heißgasleitung so aus, daß die Temperaturen der die Wärme übertragenden Flächen starken Schwankungen unterliegen. Dies führt insbesondere bei der Temperierung von Schokolade dazu, daß die Kakaobutteranteile auch in solchen Kristallformen erstarren, welche unerwünscht sind. Die Menge der Kristalle in der erwünschten stabilen Form kann dabei stark schwanken und vor allen Dingen - je nach Betriebszustand - unzureichend sein. Dies ist vorwiegend bei zu niedriger Kühlflächentemperatur der Fall. Umgekehrt bilden sich bei zu hoher Kühlflächentemperatur keine oder nur in ungenügendem Maße Kristalle.

Der Erfindung liegt die Aufgabe zugrunde, bei einem Verfahren und einer Vorrichtung der eingangs beschriebenen Art trotz der notwendigen Regelung infolge schwankender Masseeingangstemperaturen und/oder Massedurchsatzmengen die Masse kontinuierlich zu temperieren, wobei es möglich ist, einen hohen Kristallgehalt in insbesondere stabiler Kristallform in möglichst konstanter Weise in der Masse zu erzeugen.

Erfindungsgemäß wird dies bei dem Verfahren der eingangs beschriebenen Art dadurch erreicht, daß die Temperierzone in ein eingangseitig vorgesehene Kühlzone für die Masse und eine ausgangsseitig vorgesehene Kristallisationszone unterteilt ist, und daß das heiße Kältemittel der Heißgasleitung nur durch die Kühlzone der Temperierzone geführt wird.

Die Erfindung geht von dem Gedanken aus, die Temperierzone in eine Kühlzone und eine Kristallisationszone zu unterteilen, wobei die Unterteilung auch in mehr als zwei Zonen erfolgen kann. Wesentlich ist nur, daß eine Kühlzone vorgesehen ist, in der die wesentliche Kühlarbeit der Masse unabhängig von wechselnden Masseeingangstemperaturen und/oder Massedurchsatzmengen erfolgt, so daß letztendlich am Eingang in die Kristallisationszone die Masse bereits eine definierte weitgehend konstante Temperatur aufweist, wie sie für die anschließende Kristallbildung in der Kristallisationszone optimal ist. Die Erfindung zielt darauf ab, die Verhältnisse in der Kristallisationszone konstant zu halten und die gesamte Regelung nur auf die Kühlzone bzw. mehrere vorgeschaltete Zonen zu verlagern, damit die Kristallisationszone am Ende der Temperierzone mit konstanten Bedingungen arbeiten kann. Dabei geht es insbesondere darum, die Temperatur der die Wärme in der Kristallisationszone übertragenden Flächen konstant zu halten, damit sich unter diesen konstanten Bedingungen eine möglichst hohe Anzahl stabiler Kristalle bilden können. Es versteht sich, daß damit bereits kleinste Schwankungen der Temperatur der Masse am Ende der Temperierzone dazu genutzt werden, um die Kühlleistung in der Kühlzone im Gegensteuersinn zu beeinflussen und so die Temperatur der Masse am Ende der Kristallisationszone und damit am Ende der Temperierzone nahezu konstant zu halten. Durch den kontinuierlichen Betrieb des Kältemittelkreislaufes mit seinem über das Expansionsventil geführten Zweig ist es möglich, diese gewünschten konstanten Bedinungen in der Kristallisationszone einzuhalten. In der Kristallisationszone wird immer im Gegenstromverfahren gearbeitet. Auch für die Kühlzone ist ein Arbeiten im Gegenstrom sinnvoll. Als Kältemittel können bekannte Kältemittel, auch solche, die weitgehend frei von Kohlenwasserstoffen sind, eingesetzt werden. Wichtig ist nur, daß sich diese Kältemittel in einem mit Luft oder Wasser gekühlten Kondensator verflüssigen lassen und im Verdampfer eine Änderung ihres Aggregatzustandes in die gasförmige Phase möglich ist, um die entsprechende Kühlwirkung zu erzielen.

Die Vorrichtung zum kontinuierlichen Temperieren von zu verarbeitenden kakaobutterhaltigen oder ähnlichen fetthaltigen Massen ist mit einem von der Masse in Masserichtung durchflossenen Temperierzylinder und einem Kältemittelkreislauf mit Kompressor, Kondensator, Expansionsventil und Verdampfer ausgestattet, wobei Kältemittel durch einen den Verdampfer bildenden Kühlmantel des Temperierzylinders im Gegenstrom geführt und so die Masse unter Direktverdampfung temperiert wird, und mit einer den Kondensator und das Expansionsventil überbrückenden Heißgasleitung versehen, in der zur Regelung der Menge des heißen Kältemittels in Abhängigkeit von der Temperatur der Masse am Ende des Temperierzylinders ein Ventil angeordnet ist. Erfindungsgemäß ist der Temperierzylinder in eine eingangsseitig vorgesehene Kühlzone für die Masse und eine ausgangsseitig vorgesehene Kristallisationszone unterteilt und das heiße Kältemittel der Heißgasleitung wird nur durch die Kühlzone des Temperierzylinders geführt.

Bei der Vorrichtung wird die Kristallisationszone frei von Einflüssen der Heißgasleitung gehalten, d. h. der kontinuierliche Betrieb des Kompressors des Kältemittelkreislaufes mit seiner konstanten Strömung nach dem Expansionsventil können sich in der Kristallisationszone derart auswirken, daß konstante Kühlflächentemperaturen geschaffen werden und es so sichergestellt ist, daß auch während dieser Vorkristallisation eine relativ hohe und weitgehend konstante Menge an Kristallen in der erwünschten stabilen Form gebildet werden. Obwohl das Ventil im Heißgaskreislauf zur Regelung der Vorrichtung auch hier periodisch öffnet und schließt, wirken sich die dadurch bedingten Temperaturschwankungen nur auf die Kühlzone, nicht aber auf die Kristallisationszone aus.

Das heiße Kältemittel der Heißgasleitung wird im Gegenstrom durch die Kühlzone des Temperierzylinders geführt. Dabei wird sinnvoll eine hohe Temperaturdifferenz an jeder Stelle der Kühlzone genutzt. Die Kühlzone kann am Eingang des Temperierzylinders beginnen, andererseits aber auch im Mittelbereich der Temperierzone angeordnet sein. Die Ein- oder Zwischenschaltung weiterer Zonen ist nicht nachteilig und ändert an der grundsätzlichen Aufteilung nichts.

Grundsätzlich gibt es zwei verschiedene Möglichkeiten, den Teil des Kältemittelkreislaufes, der über das Expansionsventil geführt wird, einerseits und die Heißgasleitung andererseits anzuschließen. Die eine Möglichkeit kennzeichnet sich dadurch, daß die Heißgasleitung an den den Verdampfer bildenden Kühlmantel des Temperierzylinders angeschlossen ist. Die andere Möglichkeit besteht darin, daß die Heißgasleitung an einen separaten, parallel zum Verdampfer geführten Mantel des Temperierzylinders angeschlossen ist. Die erste aufgezeigte Lösung ist baulich relativ einfach und kostengünstig, hat aber den Nachteil der auftretenden Gemischströmung im Kühlmantel. Getrennte Strömungen in dem Kühlmantel einerseits und in dem separaten Mantel, der als Wärmemantel bezeichnet werden kann, andererseits sind vorteilhaft für die zweite Lösung. Es versteht sich, daß die Heißgasleitung in jedem Fall einen Erwärmungseffekt erbringt, die den Kühleffekt des Kühlmantels im Bereich der Kühlzone reduziert.

Der Kühlmantel und der separate Mantel des Temperierzylinders können mit unterschiedlicher Wärmekapazität ausgelegt sein. Die Einbettung der betreffenden Schlangen oder Rohre in unterschiedlich dicke Metallmäntel, ihre relative Anordnung zueinander sowie ihre Dimensionierung sind Möglichkeiten, die erwünschte unterschiedliche Wärmekapazität zu verwirklichen.

Besonders gute Ergebnisse werden erreicht, wenn die Kühlzone für die Masse am Eingang des Temperierzylinders beginnt und sich über etwa 30 % bis 90 % der Gesamtlänge des Temperierzylinders erstreckt. Mit anderen Worten umfasst die Kristallisationszone die letzten 10 % bis 70 % der Gesamtlänge der Temperierzone. Es sei darauf hingewiesen, daß die Kristallisationszone nicht unbedingt die letzte Zone darstellen muß. Es ist auch möglich, als letzte Zone der Kristallisationszone eine Verweilzone vorzusehen oder nachzuschalten.

In der Heißgasleitung kann ein Drosselventil vorgesehen sein. Dieses Drosselventil ist zweckmäßig von Hand betätigbar, so daß hier eine Voreinstellung auf die Menge des im Kurzschluß geführten Heißgases möglich ist.

Eine vorteilhafte konstruktive Möglichkeit besteht darin, daß am Ende des Temperierzylinders ein Temperaturfühler für die Masse vorgesehen ist, daß das Ventil in der Heißgasleitung ein Magnetventil ist, und daß ein Temperaturregler für das Magnetventil vorgesehen ist. Der Temperaturfühler steuert damit nicht die Verhältnisse in der Kristallisationszone, sondern in einer vorgeschalteten Kühlzone. Damit wird eine sehr effektive Steuerung bzw. Regelung möglich.

Die Erfindung wird anhand zweier Ausführungsbeispiele weiter erläutert und beschrieben. Es zeigen:
- Fig. 1: eine schematisierte Darstellung einer ersten Ausführungsform der Vorrichtung,
- Fig. 2: eine schematisierte Darstellung einer zweiten Ausführungsform der Vorrichtung, und
- Fig. 3: eine schematisierte Darstellung einer dritten Ausführungsform der Vorrichtung.

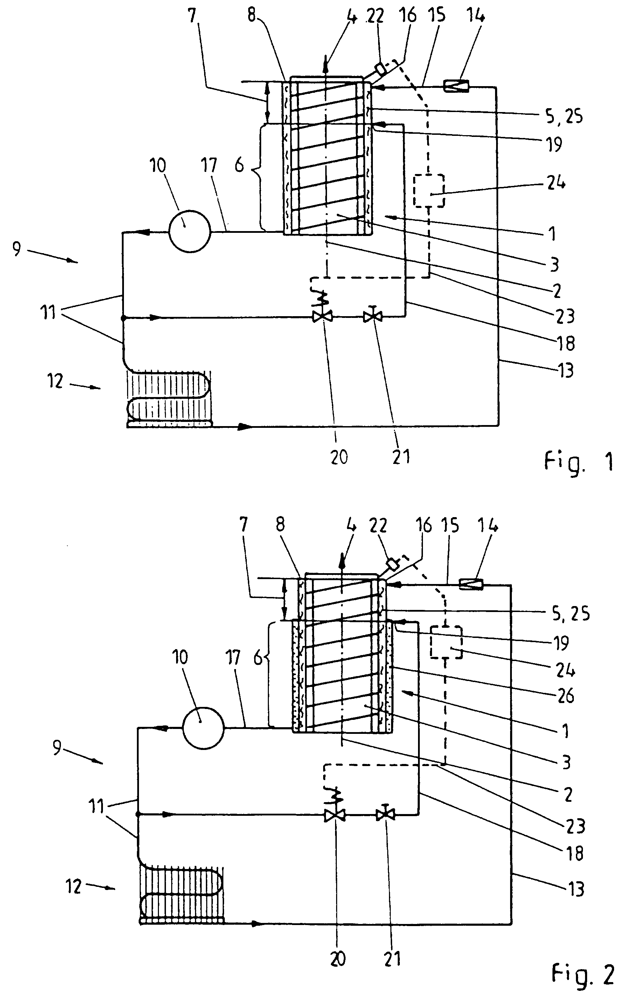

In Fig. 1 ist ein Temperierzylinder 1 schematisch angedeutet, wie er in mehr konstruktiver Ausbildung auch in dem gattungsbildenden Stand der Technik bekannt ist. Der Temperierzylinder 1 weist eine Achse 2 auf, die liegend oder stehend angeordnet sein kann. Der Temperierzylinder 1 wird von einer angetriebenen Temperierschnecke 3 durchsetzt, die im Bereich der Förderwendel die zu temperierende Masse gemäß Pfeil 4 durch den Temperierzylinder 1 fördert. Die zylindrische Wandung des die Temperierschnecke 3 umgebenden Temperierzylinders ist mit einem Kühlmantel 5 versehen, der in Schlangen- oder Kammerform ausgebildet sein kann. Der Kühlmantel 5 erstreckt sich über die gesamte axiale Länge des Temperierzylinders 1. Der Temperierzylinder 1 ist hier in eine Kühlzone 6 und eine Kristallisationszone 7 unterteilt. Die Kühlzone 6 kann am Eingang, also am Anfang des Temperierzylinders 1, beginnen und sich in Masserichtung gemäß Pfeil 4 erstrecken. Die Kristallisationszone 7 kann am Ende 8 des Temperierzylinders 1 beginnen und sich bis zum Übergang an das Ende der Kühlzone 6 erstrecken. Die Unterteilung des Temperierzylinders 1 bzw. die Ausbildung der Kühlzone 6 und der Kristallisationszone 7 wird durch die besondere Aufteilung der Zweige eines Kältemittelkreislaufes erreicht, der unter Direktverdampfung dem Temperierzylinder 1 zugeordnet ist.

Dieser Kältemittelkreislauf 9 weist einen Kompressor 10 auf, von dem eine Leitung 11 zu einem Kondensator 12 mit Sammler geführt ist. Der Kondensator 12 kann durch Luft oder Wasser gekühlt sein. Von dem Kondensator 12 führt eine Leitung 13 zu einem Expansionsventil 14. Vom Expansionsventil 14 führt eine Leitung 15 zum Anschluß 16 am Ende des Temperierzylinders 1 in den Kühlmantel 5, der von dem flüssigen Kältemittel, welches über das Expansionsventil 14 geleitet ist, im Gegenstrom durchflossen wird. Vom Anfang des Temperierzylinders 1 führt eine Leitung 17 zurück zum Kompressor 10. Zusätzlich zu diesem aufgezeigten Teilkreislauf ist eine Heißgasleitung 18 vorgesehen, die als Kurzschlußleitung von der Leitung 11 abzweigt, den Kondensator 12 und das Expansionsventil 14 überbrückt und zu einem Anschluß 19 an dem Kühlmantel 5 führt. Die Lage dieses Anschlusses 19 am Kühlmantel 5 erbringt die Unterteilung des Temperierzylinders 1 in die Kühlzone 6 und in die Kristallisationszone 7. Beginnend am Anschluß 19 wird also das Innere des Kühlmantels 5 bis zum Anfang des Temperierzylinders 1 von einer Gemischströmung im Gegenstromverfahren durchströmt, die sich aus dem Teil des über das Expansionsventil 14 geführten Kältemittels und dem Teil des im Kurzschluß über die Heißgasleitung 18 geführten gasförmigen Kältemittels zusammensetzt. In der Heißgasleitung 18 ist ein Ventil 20 angeordnet. Vor oder nach diesem Ventil 20, welches vorzugsweise als Magnetventil ausgebildet ist, kann ein Drosselventil 21 vorgesehen sein. Das Drosselventil 21 ist im Sinne einer Voreinstellung per Hand einstellbar. Das Ventil 20 besitzt zwei Stellungen, nämlich die Stellung Auf und die Stellung Zu. Es wird über einen Temperaturfühler 22, einen Temperaturregler 24 und eine elektrische Leitung 23 angesteuert.

Der Kühlmantel 5 des Temperierzylinders stellt zugleich den Verdampfer 25 des Kältemittelkreislaufes 9 dar. Der Verdampfer 25 erstreckt sich über die gesamte axiale Länge des Temperierzylinders 1. Die Kühlzone 6 dagegen erstreckt sich nur über etwa 30 % bis 90 % der Verdampferfläche.

Das Ausführungsbeispiel der Vorrichtung gemäß Fig. 2 baut in weiten Bereichen auf dem Ausführungsbeispiel der Fig. 1 auf, weshalb auf dessen Beschreibung verwiesen werden kann. Abweichend hiervon ist lediglich zusätzlich zu dem Kühlmantel 5 ein weiterer Mantel 26 vorgesehen. Die Heißgasleitung 18 mit ihrem Anschluß 19 mündet in diesen zusätzlichen Mantel 26. Das über das Expansionsventil 14 fließende Kältemittel und das in der Heißgasleitung 18 durch den Mantel 26 fließende Kältemittel werden erst am Anfang des Temperierzylinders 1 bzw. der Kühlzone 6 zusammengeführt und zusammen über die Leitung 17 dem Kompressor 10 zugeleitet. Auch hier bestimmt die Lage des Anschlusses 19 bzw. die axiale Erstreckung des Mantels 26 die Größe der Kühlzone 6 und indirekt die Größe der Kristallisationszone 7.

Bei den beiden Ausführungsformen der Fig. 1 und 2 ist wesentlich, daß die Kristallisationszone 7 ausschließlich von dem Kühlmittel im Bereich des Kühlmantels 5 durchflossen wird, der über das Expansionsventil 14 geleitet wurde. Damit ist sichergestellt, daß im Bereich der Kristallisationszone 7 konstante Verhältnisse herrschen, insbesondere konstante Oberflächentemperaturen, mit denen die die Temperierschnecke 3 umgebende Masse in Kontakt kommt. Dagegen wird die mengen- und/oder temperaturabhängige Regelung der Vorrichtung, also die Ausregelung bei schwankenden Massedurchsatzmengen und/oder wechselnden Eingangstemperaturen der Masse, ausschließlich im Bereich der Kühlzone 6 ausgeregelt. Am Übergang zwischen der Kühlzone 6 in die Kristallisationszone 7 weist daher die Masse bereits eine weitgehend konstante Temperatur auf, wie sie für das Wachstum stabiler Kristallformen in der Masse in der Kristallisationszone sinnvoll ist. Am Ende des Temperierzylinders besitzt die austretende Masse eine quasi konstante Temperatur. Geringfügige Schwankungen der Temperatur werden im Bereich der Kühlzone 6 ausgeregelt.

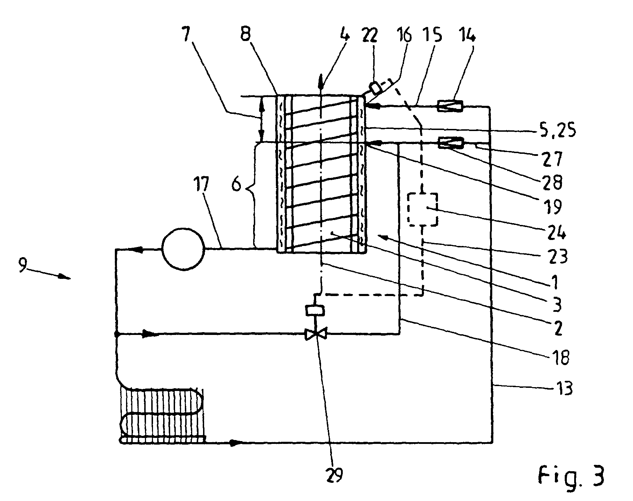

Die in Fig. 3 dargestellte Ausführungsform baut im wesentlichen auf der Ausführungsform gemäß Fig. 1 auf. Von der Leitung 13 zweigt jedoch zusätzlich eine Leitung 27 ab, in der ein weiteres Expansionsventil 28 vorgesehen ist. Die Heißgasleitung mündet in diese Leitung 27 nach dem Expansionsventil 28 ein. Die Leitung 27 führt zum Anschluß 19 der Kühlzone 6. In den Leitungen 15 und 27 können nicht dargestellte Ventile zur Einstellung der Mengenaufteilung vorgesehen sein. In der Heißgasleitung 18 ist anstelle des Ventils 20 und des Drosselventils 21 ein stufenlos arbeitenden Motor-Drosselventil vorgesehen, welches von dem Temperaturfühler 22 und dem Temperaturregler 24 angesteuert wird. Auch hier kann der Verdampfer 25 einteilig, jedoch mit mehreren Anschlüssen 16, 19, oder aber unter Verwendung eines zusätzlichen Mantels 26, wie bei dem Ausführungsbeispiel der Fig. 2, vorgesehen sein.

### BEZUGSZEICHENLISTE

- 1 -: Temperierzylinder
- 2 -: Achse
- 3 -: Temperierschnecke
- 4 -: Pfeil
- 5 -: Kühlmantel
- 6 -: Kühlzone
- 7 -: Kristallisationszone
- 8 -: Ende
- 9 -: Kältemittelkreislauf
- 10 -: Kompressor
- 11 -: Leitung
- 12 -: Kondensator
- 13 -: Leitung
- 14 -: Expansionsventil
- 15 -: Leitung
- 16 -: Anschluß
- 17 -: Leitung
- 18 -: Heißgasleitung
- 19 -: Anschluß
- 20 -: Ventil
- 21 -: Drosselventil
- 22 -: Temperaturfühler
- 23 -: el. Leitung
- 24 -: Temperaturregler
- 25 -: Verdampfer
- 26 -: Mantel
- 27 -: Leitung
- 28 -: Expansionsvetnil
- 29 -: Motor-Drosselventil

## Patentansprüche

1. Verfahren zum kontinuierlichen Temperieren von zu verarbeitenden kakaobutterhaltigen oder ähnlichen fetthaltigen Massen, mit einer von der Masse in Masserichtung durchflossenen Temperierzone und einem Kältemittelkreislauf (9), wobei Kältemittel durch einen den Verdampfer (25) bildenden Kühlmantel (5) der Temperierzone im Gegenstrom geführt und so die Masse unter Direktverdampfung temperiert wird, und mit einer den Kondensator (12) und das Expansionsventil (14) des Kältemittelkreislaufs (9) überbrückenden Heißgasleitung (18), in der die Menge des heißen Kältemittels in Abhängigkeit von der Temperatur der Masse am Ende der Temperierzone geregelt wird, **dadurch gekennzeichnet**, daß die Temperierzone in eine eingangsseitig vorgesehene Kühlzone (6) für die Masse und eine ausgangsseitig vorgesehene Kristallisationszone (7) unterteilt ist, und daß das heiße Kältemittel der Heißgasleitung (18) nur durch die Kühlzone (6) der Temperierzone geführt wird.

2. Verfahren nach Anspruch 1, **dadurch gekennzeichnet**, daß das heiße Kältemittel der Heißgasleitung (18) im Gegenstrom durch die Kühlzone (6) der Temperierzone geführt wird.

3. Vorrichtung zum kontinuierlichen Temperieren von zu verarbeitenden kakaobutterhaltigen oder ähnlichen fetthaltigen Massen, mit einem von der Masse in Masserichtung durchflossenen Temperierzylinder (1) und einem Kältemittelkreislauf (9) mit Kompressor (10), Kondensator (12), Expansionsventil (14) und Verdampfer (25), wobei Kältemittel durch einen den Verdampfer (25) bildenden Kühlmantel (5) des Temperierzylinders (1) im Gegenstrom geführt und so die Masse unter Direktverdampfung temperiert wird, und mit einer den Kondensator (12) und das Expansionsventil (14) überbrückenden Heißgasleitung (18), in der zur Regelung der Menge des heißen Kältemittels in Abhängigkeit von der Temperatur der Masse am Ende des Temperierzylinders (1) ein Ventil (20) angeordnet ist, **dadurch gekennzeichnet**, daß der Temperierzylinder (1) in eine eingangsseitig vorgesehene Kühlzone (6) für die Masse und eine ausgangsseitig vorgesehene Kristallisationszone (7) unterteilt ist, und daß das heiße Kältemittel der Heißgasleitung (18) nur durch die Kühlzone (6) des Temperierzylinders (1) geführt wird.

4. Vorrichtung nach Anspruch 3, **dadurch gekennzeichnet**, daß das heiße Kältemittel der Heißgasleitung (18) im Gegenstrom durch die Kühlzone (6) des Temperierzylinders (1) geführt wird.

5. Vorrichtung nach Anspruch 3 oder 4, **dadurch gekennzeichnet**, daß die Heißgasleitung (18) an den den Verdampfer (25) bildenden Kühlmantel (5) des Temperierzylinders (1) angeschlossen ist.

6. Vorrichtung nach Anspruch 3 oder 4, **dadurch gekennzeichnet**, daß die Heißgasleitung (18) an einen separaten, parallel zum Verdampfer (25) geführten Mantel (26) des Temperierzylinders (1) angeschlossen ist.

7. Vorrichtung nach Anspruch 6, **dadurch gekennzeichnet**, daß der Kühlmantel (5) und der separate Mantel (26) des Temperierzylinders (1) mit unterschiedlicher Wärmekapazität ausgelegt sind.

8. Vorrichtung nach Anspruch 3, **dadurch gekennzeichnet**, daß die Kühlzone (6) für die Masse am Eingang des Temperierzylinders (1) beginnt und sich über etwa 30 % bis 90 % der Gesamtlänge des Temperierzylinders (1) erstreckt.

9. Vorrichtung nach Anspruch 3, **dadurch gekennzeichnet**, daß in der Heißgasleitung (18) ein Drosselventil (21) vorgesehen ist.

10. Vorrichtung nach Anspruch 3, **dadurch gekennzeichnet**, daß am Ende (8) des Temperierzylinders (1) ein Temperaturfühler (22) für die Masse vorgesehen ist, daß das Ventil (20) in der Heißgasleitung (18) ein Magnetventil ist, und daß ein Temperaturregler (24) für das Magnetventil vorgesehen ist.

## Claims

1. A method of continuously tempering masses containing cocoa butter or similar fat containing masses to be processed, including a tempering zone through which the mass flows in the mass direction and a cooling medium circuit (9), cooling medium being directed in reverse flow through a cooling jacket (5) of the tempering zone forming the evaporator (25) in a way that the mass is being tempered by direct evaporation, and a hot gas conduit (18) bypassing the condenser (12) and the expansion valve (14) of the cooling medium circuit (9), the amount of hot cooling medium being controlled in the hot gas conduit (18) in dependence on the temperature of the mass at the end of tempering zone, **characterized in** that the tempering zone is divided into a cooling zone (6) for the mass being located in the region of the entrance and a crystallization zone (7) being located in the region of the exit, and that the hot cooling medium of the hot gas conduit (18) is exclusively directed though the cooling zone (6) of the tempering zone.

2. The method of claim 1, **characterized in** that the hot cooling medium of the hot gas conduit (18) is directed through the cooling zone (6) of the tempering zone in reverse flow.

3. An apparatus for continuously tempering masses containing cocoa butter or similar fat containing masses to be processed, including a tempering cylinder (1) through which the mass flows in the mass direction and a cooling medium circuit (9) including a compressor (10), a condenser (12), an expansion valve (14) and an evaporator (25), cooling medium being directed in reverse flow through a cooling jacket (5) of the tempering cylinder (1) forming the evaporator (25) in a way that the mass is being tempered by direct evaporation, and a hot gas conduit (18) bypassing the condenser (12) and the expansion valve (14), a valve (20) being arranged in the hot gas conduit (18) to control the amount of hot cooling medium in dependence on the temperature of the mass at the end of the tempering cylinder (1), **characterized in** that the tempering cylinder (1) is divided into a cooling zone (6) for the mass being located in the region of the entrance and a crystallization zone (7) being located in the region of the exit, and that the hot cooling medium of the hot gas conduit (18) is exclusively directed though the cooling zone (6) of the tempering cylinder (1).

4. The apparatus of claim 3, **characterized in** that the hot cooling medium of the hot gas conduit (18) is directed through the cooling zone (6) of the tempering cylinder (1) in reverse flow.

5. The apparatus of claim 3 or 4, **characterized in** that the hot gas conduit (18) is connected to the cooling jacket (5) of the tempering cylinder (1) forming the evaporator (25).

6. The apparatus of claim 3 or 4, **characterized** in that the hot gas conduit (18) is connected to a separate jacket (26) of the tempering cylinder (1), the jacket (26) being arranged parallel to the evaporator (25).

7. The apparatus of claim 6, characterized in that the cooling jacket (5) and the separate jacket (26) of the tempering cylinder (1) are designed to have different heat capacities.

8. The apparatus of claim 3, **characterized in** that the cooling zone (6) for the mass starts at the entrance of the tempering cylinder (1) and extends over approximately 30 % up to 90 % of the total length of the tempering cylinder (1).

9. The apparatus of claim 3, **characterized in** that a throttling valve (21) is arranged in the hot gas conduit (18).

10. The apparatus of claim 3, **characterized in** that a temperature sensor (22) for the mass is arranged at the end (8) of the tempering cylinder (1), that the valve (20) being located in the hot gas conduit (18) is a solenoid valve, and that a temperature control unit (24) for the solenoid valve is provided.

## Revendications

1. Procédé d'équilibrage de température continu de masses à traiter contenant du beurre de cacao ou de masses analogues contenant des matières grasses, avec une zone d'équilibrage de température traversée par la masse dans une direction de masse et une boucle (9) d'agent frigorifique, un agent frigorifique étant conduit à contre-courant à travers une enveloppe réfrigérante (5) formant l'évaporateur (25) et la masse étant ainsi équilibrée en température sous évaporation directe, et avec une conduite de gaz chaud (18), pontant le condenseur (12) et la valve d'expansion (14) de la boucle (9) d'agent frigorifique, dans laquelle la quantité d'agent frigorifique chaud est régulée en dépendance de la température de la masse à la fin de la zone d'équilibrage de température,
caractérisé en ce que la zone d'équilibrage de température est divisée en une zone de refroidissement (6) pour la masse disposée du côté entrée et une zone de cristallisation (7) disposée du côté sortie et que l'agent frigorifique chaud de la conduite de gaz chaud (18) n'est conduit qu'à travers la zone de refroidissement (6) de la zone d'équilibrage de température.

2. Procédé selon la revendication 1,
caractérisé en ce que l'agent frigorifique chaud de la conduite de gaz chaud (18) est conduit à contre-courant à travers la zone de refroidissement (6) de la zone d'équilibrage de température.

3. Dispositif d'équilibrage de température continu de masses à traiter contenant du beurre de cacao ou de masses analogues contenant des matières grasses, avec un cylindre d'équilibrage de température (1) traversé par la masse dans une direction de masse et une boucle (9) d'agent frigorifique avec un compresseur (10), un condenseur (12), une valve d'expansion (14) et un évaporateur (25), un agent frigorifique étant conduit à contre-courant à travers une enveloppe réfrigérante (5) du cylindre d'équilibrage de température (1) formant l'évaporateur (25), et la masse étant ainsi équilibrée en température sous évaporation directe, et avec une conduite de gaz chaud (18), pontant le condensateur (12) et la valve d'expansion (14), dans laquelle, une valve (20) est prévue pour la régulation de la quantité d'agent frigorifique chaud en dépendance de la température à l'extrémité du cylindre d'équilibrage de température (1),
caractérisé en ce que le cylindre d'équilibrage de température (1) est divisé en une zone de refroidissement (6) pour la masse disposée du côté entrée et une zone de cristallisation (7) disposée du côté sortie et que l'agent frigorifique chaud de la conduite de gaz chaud (18) n'est conduit qu'à travers la zone de refroidissement (6) du cylindre d'équilibrage de température (1).

4. Dispositif selon la revendication 3,
caractérisé en ce que l'agent frigorifique chaud de la conduite de gaz chaud (18) est conduit à contre-courant à travers la zone de refroidissement (6) du cylindre d'équilibrage de température (1).

5. Dispositif selon la revendication 3 ou 4,
caractérisé en ce que la conduite de gaz chaud (18) est raccordée à l'enveloppe réfrigérante (5) du cylindre d'équilibrage de température (1) formant l'évaporateur (25).

6. Dispositif selon la revendication 3 ou 4,
caractérisé en ce que la conduite de gaz chaud (18) est raccordée à une enveloppe (26) du cylindre d'équilibrage de température (1) séparée, disposée parallèle à l'évaporateur (25).

7. Dispositif selon la revendication 6,
caractérisé en ce que l'enveloppe réfrigérante (5) et l'enveloppe (26) du cylindre d'équilibrage (1) séparée sont revêtues avec des capacités thermiques différentes.

8. Dispositif selon la revendication 3,
caractérisé en ce que la zone de refroidissement (6) pour la masse commence à l'entrée du cylindre d'équilibrage de température (1) et s'étend sur environ 30 % à 90 % de la longueur totale du cylindre d'équilibrage de température (1).

9. Dispositif selon la revendication 3,
caractérisé en ce qu'une valve d'étranglement (21) est disposée dans la conduite de gaz chaud (18).

10. Dispositif selon la revendication 3,
caractérisé en ce qu'un capteur de température (22) pour la masse est disposé à l'extrémité (8) du cylindre d'équilibrage de température (1), que la valve (20) dans la conduite de gaz chaud (18) est une valve magnétique et qu'est prévu un thermorégulateur (24) pour la valve magnétique.
